# EUROPÄISCHE PATENTSCHRIFT

(11) **EP 2 559 587 B1**
(45) Veröffentlichungstag und Bekanntmachung des Hinweises auf die Patenterteilung: **19.02.2020**
(21) Anmeldenummer: 11176539.2
(22) Anmeldetag: 04.08.2011
(51) Int. Cl.: B60L 53/14, B60L 53/22, B60L 50/51, B60L 53/24

(54) **Umrichter zum Betreiben eines elektrischen Antriebsmotors eines Elektrofahrzeugs, Kraftwagen und Verfahren zum Betreiben des Umrichters**
Converter for operating an electric drive motor of an electric vehicle, motor vehicle and method for operating the converter
Convertisseur destiné au fonctionnement d'un moteur d'entraînement électrique d'un véhicule électrique, véhicule automobile et procédé de fonctionnement du convertisseur

(43) Veröffentlichungstag der Anmeldung: 20.02.2013
(73) Patentinhaber: Valeo Siemens eAutomotive Germany GmbH, 91056 Erlangen (DE)
(72) Erfinder: Eckardt, Dieter, 91074 Herzogenaurach (DE)
(74) Vertreter: Dr. Gassner & Partner mbB

(56) Entgegenhaltungen:
- WO-A1-79/01134
- DE-A1- 3 410 293
- US-A1- 2004 130 288

## Beschreibung

Die Erfindung betrifft einen elektrischen Umrichter zum Betreiben eines elektrischen Antriebsmotors eines Elektrofahrzeugs. Unter einem Elektrofahrzeug ist hier insbesondere ein Kraftwagen zu verstehen. Es kann sich bei dem Elektrofahrzeug aber z.B. auch um ein Flurförderzeug handeln. Zu der Erfindung gehören auch ein elektrisch antreibbarer Kraftwagen und ein Verfahren zum Betreiben eines Umrichters.

Bei einem Elektrofahrzeug kann eine elektrische Energie zum Betreiben eines elektrischen Antriebsmotors des Elektrofahrzeugs durch einen Akkumulator bereitgestellt werden. Dieser wird auch als Traktionsbatterie bezeichnet. Eine von einer solchen Traktionsbatterie erzeugte Gleichspannung wird dabei mittels eines elektrischen Umrichters des Elektrofahrzeugs in eine Wechselspannung umgewandelt, wie sie zum Erzeugen eines Drehfeldes in dem Antriebsmotor benötigt wird.

Zum Aufladen der Traktionsbatterie mit elektrischer Energie kann vorgesehen sein, das Elektrofahrzeug an einer Ladestation mit einem elektrischen Versorgungsnetz zu verbinden. Falls es sich bei dem Elektrofahrzeug um einen Personenkraftwagen handelt, kann eine Ladestation beispielsweise in einer Garage eines Benutzers des Personenkraftwagens installiert sein.

Über elektrische Versorgungsnetze wird im Allgemeinen eine Wechselspannung bereitgestellt. Die Traktionsbatterie könnte in einem solchen Fall mittels einer 230 V-Wechselspannung aufgeladen werden, wie sie beispielsweise in Europa verfügbar ist.

Zum Aufladen der Traktionsbatterie wird allerdings eine Gleichspannung benötigt. Entsprechend muss ein Ladegerät bereitgestellt werden, mittels welchem die gewünschte Auflade-Gleichspannung aus der Wechselspannung eines Versorgungsnetzes erzeugt werden kann.

In dem Dokument WO 79/01134 A1 ist eine Reluktanzmaschine mit integriertem Umrichter beschrieben, die in einem Kraftwagen eingebaut sein kann. Zusätzlich ist ein Anschluss für ein Aufladekabel vorgesehen, der über einen Gleichrichter mit dem Umrichter gekoppelt ist. Zum Aufladen einer Traktionsbatterie des Kraftwagens kann die Gleichspannung des Gleichrichters über einen Resonanzwandler in Hauptspulen des Elektromotors eingespeist werden und über Sekundärspulen des Elektromotors und Gleichrichterdioden an die Batterie übertragen werden. Der Elektromotor wirkt hierbei als Transformator. Der Resonanzwandler wird über separate Thyristoren gespeist. Zum Betreiben des Elektromotors sind den Hauptspulen des Elektromotors andere Thyristoren in Reihe geschaltet.

In dem Dokument DE 34 10 293 A1 ist ein Elektrofahrzeug mit Drehstrommaschine beschrieben, welches eine Traktionsbatterie aufweist, die über einen DC/DC-Wandler und einen separaten Stromrichter mit der Drehstrommaschine gekoppelt ist. Zum Aufladen der Traktionsbatterie kann der Wechselspannungsausgang des Stromrichters auch mit einem Netzanschluss gekoppelt werden und so durch inverses Betreiben des Stromrichters eine Gleichspannung zum Aufladen der Traktionsbatterie erzeugt werden.

In dem Dokument US 2004/130288 A1 ist in einer Diskussion des Stands der Technik beschrieben, dass in einem elektrisch antreibbaren Kraftfahrzeug ein Aufladegerät integriert sein kann. Es wird zwischen isolierten Aufladesystemen, nichtisolierten Aufladesystemen und integrierten Aufladesystemen unterschieden. Die isolierten Aufladesysteme umfassen einen Resonanzwandler und eine transformatorische Entkopplung des Aufladesystems von der Fahrzeugbatterie während des Aufladevorgangs. Integrierte Aufladesysteme nutzen die Wicklungen des Motors als Transformatoren während des Aufladens der Batterie.

Es ist Aufgabe der vorliegenden Erfindung, eine Aufladevorrichtung zum Aufladen einer Traktionsbatterie eines elektrisch antreibbaren Fahrzeugs bereitzustellen, die kostengünstig herstellbar ist.

Die Aufgabe wird durch einen Umrichter gemäß Patentanspruch 1, einen Kraftwagen gemäß Patentanspruch 5 sowie ein Verfahren gemäß Patentanspruch 6 gelöst. Vorteilhafte Weiterbildungen des erfindungsgemäßen Umrichters und des erfindungsgemäßen Verfahrens sind durch die Unteransprüche gegeben. Mittels des elektrischen Umrichters lässt sich sowohl ein elektrischer Antriebsmotor eines Elektrofahrzeugs in gewohnter Weise betreiben als auch eine Traktionsbatterie des Elektrofahrzeugs aufladen.

Der Antriebsmotor lässt sich an einen Wechselspannungsausgang des Umrichters anschließen. Über einen Gleichspannungsanschluss kann eine Traktionsbatterie an den Umrichter angeschlossen werden. Der Gleichspannungsanschluss ist dabei über eine Wechselrichterschaltung des Umrichters mit dem Wechselspannungsausgang gekoppelt. Mittels der Wechselrichterschaltung können so aus einer von der Traktionsbatterie am Gleichspannungsanschluss erzeugten Gleichspannung an dem Wechselspannungsausgang Wechselspannungen erzeugt werden, wie sie zum Betreiben des Elektromotors nötig sind.

Zum Aufladen der Traktionsbatterie weist der Umrichter einen weiteren Wechselspannungseingang auf, über welchen der Umrichter mit einer Wechselspannungsquelle verbunden werden kann, also z.B. mit einer Ladestation oder auch mit einem Generator, der mit einem Verbrennungsmotor des Fahrzeugs gekoppelt sein kann. Der Wechselspannungsanschluss ist bei dem erfindungsgemäßen Umrichter über eine Gleichrichterschaltung ebenfalls mit dem Gleichspannungsanschluss gekoppelt. Mittels dieser integrierten Gleichrichterschaltung wandelt der Umrichter eine Wechselspannung der Wechselspannungsquelle in eine Auflade-Gleichspannung um, welche dann direkt an dem Gleichspannungsanschluss des Umrichters zu Verfügung steht. Es muss also lediglich der Wechselspannungseingang mit einer Wechselspannungsquelle gekoppelt werden, um die Traktionsbatterie des Elektrofahrzeugs aufzuladen. Der eben beschriebene Aufladevorgang entspricht auch dem ebenfalls zur Erfindung gehörigen erfindungsgemäßen Verfahren.

Ein mit dem erfindungsgemäßen Umrichter ausgestattetes Elektrofahrzeug ist kostengünstiger herstellbar als ein Elektrofahrzeug mit einem separaten Ladegerät, denn es werden weder ein zusätzliches Gehäuse für das Ladegerät noch zusätzliche Anschlüsse zum Koppeln des Ladegeräts mit der Traktionsbatterie benötigt. Da der erfindungsgemäße Umrichter stets mit dem Elektrofahrzeug mitgeführt wird, kann die Traktionsbatterie des Elektrofahrzeugs auch an unterschiedlichen Orten aufgeladen werden.

Der erfindungsgemäße Umrichter sieht vor, dass die Gleichrichterschaltung wenigstens eine erste Gleichrichteinheit aufweist, welche zumindest ein induktives Schaltungselement, also z.B. eine Spule, und ein diesem nachgeschaltetes Gleichrichtelement zum Gleichrichten einer über dem induktiven Schaltungselement abfallenden Wechselspannung umfasst. Die so gleichgerichtete Spannung ist dabei zwischen einem Plus-Kontakt des Gleichspannungsanschlusses und einen Minus-Kontakt desselben als eine Auflade-Gleichspannung abgreifbar.

Die beiden Kontakte des Gleichspannungsanschlusses sind über eine Reihenschaltung aus einer Spule und einer Diode miteinander verbunden. Mittels der Spule, oder allgemein eben mittels des induktiven Schaltelements, wird ein Effektivwert einer Amplitude der gleichgerichteten Spannung, also der Auflade-Gleichspannung, auf einen Wert eingestellt, der von einem Effektivwert der Eingangs-Wechselspannung am Wechselspannungseingang verschieden ist.

Im Zusammenhang mit der Erfindung ist unter einer Gleichspannung auch eine gleichgerichtete Spannung zu verstehen, also z.B. auch eine mittels einer Vollweg-Gleichrichtung erzeugte gleichgerichtete Spannung mit einer für diesen Typ von Gleichrichtung typischen Welligkeit eines Verlaufs der gleichgerichteten Spannung. Entsprechend ist ein Gleichrichtelement in einer Ausführungsform des erfindungsgemäßen Umrichters durch eine Diode bereitgestellt.

Die Gleichrichterschaltung weist eine zweite Gleichrichteinheit und einen Resonanzwandler auf, über welche die erste Gleichrichteinheit mit dem Wechselspannungseingang gekoppelt ist. Die über den Wechselspannungseingang empfangene Wechselspannung wird also nicht unmittelbar in die Auflade-Gleichspannung umgewandelt, sondern es wird zunächst mittels der zweiten Gleichrichteinheit eine Zwischen-Gleichspannung erzeugt und aus dieser mittels des Resonanzwandlers eine Zwischen-Wechselspannung. Aus dieser wird dann anschließend mittels der oben beschriebenen ersten Gleichrichteinrichtung die Auflade-Gleichspannung erzeugt. Mittels des Resonanzwandlers lässt sich dabei in vorteilhafter Weise eine Stromstärke eines Aufladestroms steuern, der über den Gleichspannungsanschluss in die Traktionsbatterie fließt. Ein weiterer Vorteil besteht darin, dass auch mittels des Resonanzwandlers ein Effektivwert der Amplitude der Auflade-Gleichspannung auf einen Wert eingestellt werden kann, der von einem Effektivwert der über den Wechselspannungseingang empfangenen Wechselspannung verschieden ist. Ein weiterer Vorteil bei der Verwendung eines Resonanzwandlers besteht darin, dass sich mit diesem Störaussendungen der Gleichrichterschaltung minimieren lassen. Ein Resonanzwandler zeichnet sich nämlich durch sinusförmige Wandlerströme aus, so dass der Anteil an Oberwellen gering ist.

Die Wechselrichterschaltung umfasst eine Umrichter-Brückenschaltung. Eine solche Umrichter-Brückenschaltung weist Halbbrücken auf, mittels welchen aus der Gleichspannung der Traktionsbatterie die Wechselspannungen für Phasenstränge des Antriebsmotors erzeugt werden. Bei dem erfindungsgemäßen Umrichter lässt sich eine solche Halbbrücke auch als Wechselschalteinrichtung betreiben, mittels welcher ein Anschluss eines LC-Glieds des Resonanzwandlers abwechselnd mit Kontakten der ersten Gleichrichtereinheit gekoppelt werden kann, um so die Zwischen-Wechselspannung zu erzeugen. Durch die doppelte Nutzung der Halbbrücke der Umrichter-Brückenschaltung wird die Anzahl der zur Herstellung des Umrichters benötigten Bauteile verringert.

Die elektromagnetische Verträglichkeit (EMV) ist beim erfindungsgemäßen Umrichter noch weiter reduziert, indem ein Schaltzustand der Wechselschalteinrichtung zum abwechselnden Koppeln eines Anschlusses eines LC-Glieds des Resonanzwandlers mit Kontakten der ersten Gleichrichteinheit nur in einem Nulldurchgang eines Verlaufs einer Stromstärke eines durch das LC-Glied fließenden Wechselstroms verändert wird. Diese Form des Schaltens ist gemäß einer Ausführungsform des erfindungsgemäßen Verfahrens auch im Zusammenhang mit anderen Resonanzwandlern beansprucht.

Eine vorteilhafte Weiterbildung des erfindungsgemäßen Umrichters mit der ersten Gleichrichteinheit sieht vor, dass das induktive Schaltungselement durch eine Sekundärspule eines Transformators gebildet ist, dessen Primärspule (gegebenenfalls über weitere Schaltungselemente) mit dem Wechselspannungseingang gekoppelt ist. Mittels des Transformators lassen sich der Wechselspannungseingang und der Gleichspannungsanschluss galvanisch voneinander trennen.

Bei dem erfindungsgemäßen Umrichter ist vorzugsweise eine Trenneinrichtung vorgesehen, mittels welcher eine elektrische Verbindung zwischen dem Gleichspannungsanschluss und wenigstens einem Bauelement der Wechselrichterschaltung unterbrochen werden kann. Dann lässt sich während eines Aufladens der Traktionsbatterie das galvanisch getrennte Bauelement oder auch ein anderes Bauelement oder eine ganze Baugruppe der Wechselrichterschaltung während des Aufladens umfunktionieren, so dass Teile der Wechselrichterschaltung während des Betriebs des Motors eine Funktion und während des Aufladens der Traktionsbatterie eine andere Funktion übernehmen können.

Um eine Traktionsbatterie mittels des erfindungsgemäßen Umrichters an möglichst vielen Orten aufladen zu können, kann der Wechselspannungseingang des Umrichters einen Anschlussstecker zum Anschließen des Umrichters an eine Steckdose eines elektrischen Versorgungsnetzes umfassen.

Ein weiterer Aspekt der Erfindung betrifft einen Kraftwagen mit einem Elektromotor zum Antreiben des Kraftwagens und mit einer Traktionsbatterie zum Bereitstellen einer elektrischen Gleichspannung, mittels welcher der Elektromotor betrieben werden kann. Der erfindungsgemäße Kraftwagen weist zudem eine Ausführungsform des erfindungsgemäßen Umrichters auf, über welchen die Traktionsbatterie mit dem Elektromotor gekoppelt ist. Der Kraftwagen bedarf keines separaten Aufladegeräts, um die Traktionsbatterie an einer Wechselspannungsquelle aufladen zu können.

Die Erfindung wird im Folgenden anhand von Ausführungsbeispielen näher erläutert. Dazu zeigt:
- FIG 1: einen schematischen Schaltplan eines Umrichters und
- FIG 2: einen schematischen Schaltplan eines weiteren Umrichters gemäß einer anderen Ausführungsform des erfindungsgemäßen Umrichters.

Die Beispiele stellen bevorzugte Ausführungsformen der Erfindung dar.

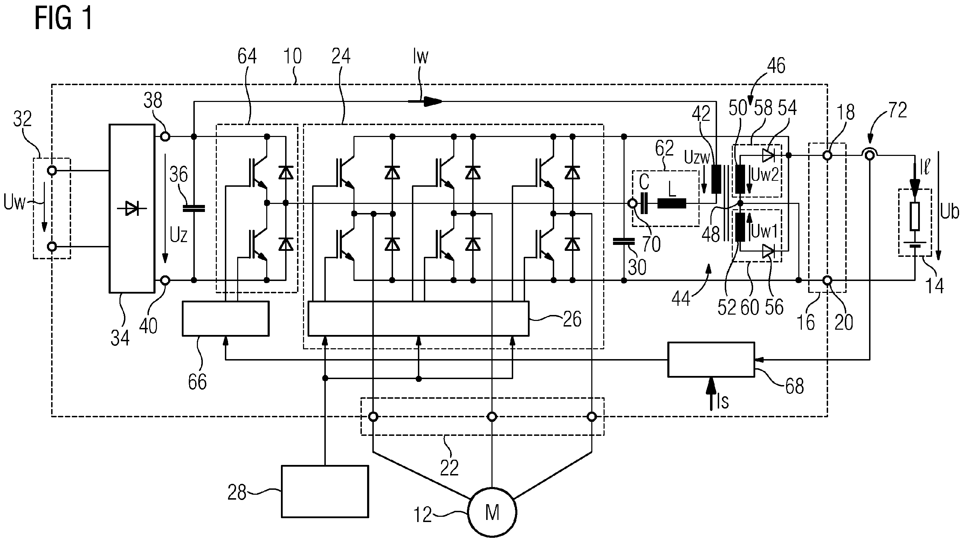

In FIG 1 ist ein Umrichter 10 gezeigt, der in dem der FIG 1 zugrunde liegenden Beispiel in einen (nicht näher dargestellten) Personenkraftwagen eingebaut ist. Mittels des Umrichters 10 ist ein Elektromotor 12 des Personenkraftwagens betreibbar. Bei dem Elektromotor 12 handelt es sich um eine Drehfeldmaschine, die einen Antriebsmotor für den Personenkraftwagen bildet. Eine elektrische Energie zum Betreiben des Elektromotors 12 empfängt der Umrichter 10 aus einer Traktionsbatterie 14 des Personenkraftwagens. Die Traktionsbatterie 14 ist dazu an einen Gleichspannungsanschluss 16 des Umrichters 10 angeschlossen. Ein Pluspol der Traktionsbatterie 14 ist mit einem Plus-Kontakt 18 des Gleichspannungsanschlusses 16 verbunden, ihr Minuspol mit einem Minus-Kontakt 20 des Gleichspannungsanschlusses 16. Der Elektromotor 12 ist an einen Wechselspannungsanschluss 22 des Umrichters 10 angeschlossen. Durch den Umrichter 10 kann aus einer von der Traktionsbatterie 14 bereitgestellten Gleichspannung an dem Wechselspannungsanschluss 22 eine dreiphasige Wechselspannung erzeugt werden, die in Ständerwicklungen des Elektromotors 12 einen Drehstrom bewirkt. Die Gleichspannung kann einen Spannungswert von über 200 V, also z.B. 400 V aufweisen. Zum Umwandeln der Gleichspannung der Traktionsbatterie 14 weist der Umrichter 10 eine Brückenschaltung 24 auf, die hier aus sechs IGBTs (IGBT - Insulated Gate Bipolar Transistor) gebildet ist. Jeweilige Gates der IGBT sind mit einer Gate-Treiberschaltung 26 gekoppelt. Durch die Gate-Treiberschaltung 26 werden Steuersignale einer Motorregeleinheit 28 in entsprechende Schaltsignale für die IGBTs umgewandelt. Anstelle der IGBTs können bei der Brückenschaltung 24 auch andere Schaltelemente verwendet werden. Es kann auch vorgesehen sein, anstelle der Brückenschaltung 24 einen anderen Wechselrichter bereitzustellen.

Mittels eines Glättungskondensators 30 wird in dem Umrichter 10 die über den Gleichspannungsanschluss 16 empfangene Gleichspannung der Traktionsbatterie 14 stabilisiert und ein Freilaufpfad für hochfrequente Ströme geschaffen.

In dem der FIG 1 zugrunde liegenden Beispiel ist die Traktionsbatterie 14 so weit entladen, dass sie wieder mit elektrischer Energie aufgeladen werden soll. Dazu hat ein Benutzer des Personenkraftwagens diesen neben einer Ladestation geparkt, aus welcher er elektrische Energie für seinen Personenkraftwagen beziehen kann. Der Umrichter 10 weist ein Anschlusskabel 32 mit einem (nicht näher dargestellten) Stecker auf, welchen der Benutzer in eine Buchse der Ladestation steckt. Das Anschlusskabel 32 bildet einen Wechselspannungseingang des Umrichters 10. Durch die Ladestation wird ein elektrischer Kontakt zwischen dem Stecker und einem elektrischen Versorgungsnetz hergestellt. In dem vorliegenden Beispiel wird hierdurch eine 50 Hz-Wechselspannung Uw mit einem Effektivwert von 230 V zwischen den Kontakten des Steckers bereitgestellt. Es kann sich aber beispielsweise auch eine 60 Hz-Wechselspannung mit einem Effektivwert von 120 V handeln.

Die Wechselspannung Uw wird durch eine Gleichrichterschaltung des Umrichters 10 in eine gleichgerichtete Spannung Ub gewandelt, durch welche bewirkt wird, dass ein Aufladestrom Il in die Traktionsbatterie 14 fließt. Die Umwandlung der Wechselspannung Uw in die gleichgerichtete Spannung Ub erfolgt bei der Gleichrichterschaltung des Umrichters 10 in mehreren Stufen.

In einer ersten Stufe wird aus der Wechselspannung Uw durch einen Gleichrichter 34 eine Zwischen-Gleichspannung Uz erzeugt. Bei dem Gleichrichter 34 kann es sich beispielsweise um einen Vollweg-Brückengleichrichter handeln. Die Zwischen-Gleichspannung Uz fällt über einem weiteren Glättungskondensator 36 ab, der zwischen einen Plus-Ausgang 38 und einen Minus-Ausgang 40 des Gleichrichters 34 geschaltet ist.

Aus der Zwischen-Gleichspannung Uz wird in einer zweiten Stufe durch einen Resonanzwandler eine Zwischen-Wechselspannung Uzw an einer Primärspule 42 eines Transformators 44 erzeugt.

In einer dritten Stufe wird die Zwischen-Wechselspannung Uzw durch den Transformator 44 in eine Wechselspannung transformiert, die über einer Sekundärspule 46 des Transformators 44 ansteht. Die Sekundärspule ist durch einen Abgriffskontakt 48 in zwei Teilspulen 50, 52 unterteilt. Der Angriffskontakt 48 ist mit dem Minus-Kontakt 20 des Gleichspannungsanschlusses 16 verbunden. Ein zweites Ende der Teilspule 50 ist über eine Diode 54 mit dem Plus-Kontakt 18 verbunden. Auch ein zweites Ende der Teilspule 52 ist über eine Diode 56 mit dem Plus-Kontakt 20 verbunden. Über den Teilspulen 50, 52 anstehende Wechselspannungen Uw1, Uw2 werden durch die ihnen jeweils nachgeschaltete Diode 54 bzw. 56 gleichgerichtet und ergeben so zusammen zwischen den Kontakten 18 und 20 des Gleichspannungsanschlusses 16 die gleichgerichtete Spannung Ub. Die Teilspule 50 und die ihr nachgeschaltete Diode 54 stellen eine erste Gleichrichteinrichtung 58 dar. Die Teilspule 52 und die ihr nachgeschaltete Diode 56 stellen eine weitere erste Gleichrichteinrichtung 60 dar.

Der Resonanzwandler zum Erzeugen der Zwischen-Wechselspannung Uzw aus der Zwischen-Gleichspannung Uz kann in an sich bekannter Weise aufgebaut sein. In dem Beispiel umfasst er ein LC-Glied 62 mit einem Kondensator C und einer Spule L, eine Halbbrücke 64 mit zwei IGBTs sowie eine Gate-Treiberschaltung 66 für die beiden IGBT der Halbbrücke 64. In FIG 1 sind zu den IGBTs der Halbbrücke 64 noch deren Freilauf-Dioden dargestellt. Die Halbbrücke 64 ist zwischen den Plus-Ausgang 38 und den Minus-Ausgang 40 des Gleichrichters 34 geschaltet. Das LC-Glied 62 ist in Reihe zu der Primärspule 42 geschaltet. Ein zweites Ende der Primärspule 42 ist hier an den Plus-Ausgang des Gleichrichters 34 angeschlossen. Anstelle der IGBTs können bei der Halbbrücke 64 auch andere Schaltelemente verwendet werden.

Die Gate-Treiberschaltung 66 schaltet abwechselnd einen der beiden IGBTs in einen leitenden Zustand, während sie für den gleichen Zeitraum den jeweils anderen IGBT in einen sperrenden Zustand schaltet. Ein entsprechendes Umschaltsignal empfängt die Gate-Treiberschaltung 66 von einer Regeleinheit 68. Durch das abwechselnde Schalten wird ein Anschluss 70 des LC-Glieds 62 abwechselnd mit dem Plus-Ausgang 38 und dem Minus-Ausgang 40 des Gleichrichters 34 elektrisch verbunden. Dies erzeugt über der Primärspule 42 die Wechselspannung Uzw. Insgesamt wird durch das Umschalten ein Wechselstrom Iw bewirkt. Der Wechselstrom Iw fließt durch die Primärspule 42 und durch das LC-Glied 62.

Durch die Regeleinheit 68 wird hierbei ermittelt, wann ein Verlauf einer Stromstärke des durch das LC-Glied 62 fließenden Wechselstroms Iw einen Nulldurchgang aufweist. Die Schaltzustände der IGBTs der Halbbrücke 64 werden von der Regeleinheit 68 über das Umschaltsignal nur während eines solchen Nulldurchgangs verändert.

Durch die Regeleinheit 68 wird das Umschaltsignal auch in Abhängigkeit von einer Stromstärke des Aufladestroms Il und einer Soll-Stromstärke Is eingestellt. Einen aktuellen Wert für die Stromstärke des Aufladestroms Il empfängt die Regeleinheit 68 von einem Stromstärkesensor 72.

Die Motorregeleinheit 28 hat nach dem Parken des Personenkraftwagens alle IGBT der Brückenschaltung 24 in einen sperrenden Zustand geschaltet. Hierdurch wird verhindert, dass während des Aufladens der Traktionsbatterie 14 ein Strom in den Elektromotor 12 fließt.

Eine Stromstärke des Wechselstroms Iw weist einen nahezu sinusförmigen Verlauf auf. Hierdurch werden Störaussendungen minimiert. Da die IGBT der Halbbrücke 64 nur im StromNulldurchgang geschaltet werden, erfolgt das Schalten nahezu leistungslos. Hierdurch sind Schaltverluste an den IGBT sehr gering. Dies führt zu einem hohen Wirkungsgrad der Gleichrichterschaltung des Umrichters 10. Die Schaltfrequenzen können im Bereich von 20 kHz bis 40 kHz liegen. Sie können aber auch anders gewählt werden, wenn sich hierdurch ein günstigerer Betrieb ergibt.

Bei dem Umrichter 10 ist die Elektronik für die Motorregelung, insbesondere die Gateansteuerung in Form der Gate-Treiberschaltung 26, elektrisch von der Ladeeinrichtung des Umrichters 10 getrennt. Die technische Ausgestaltung der Wechselrichterschaltung mit der Brückenschaltung 24 kann daher in ihrer Bauweise von einem bekannten Umrichter übernommen werden. Auch an den Motor werden keine besonderen Anforderungen hinsichtlich eines Typs und einer Ausgestaltung seines Wicklungssystems gestellt.

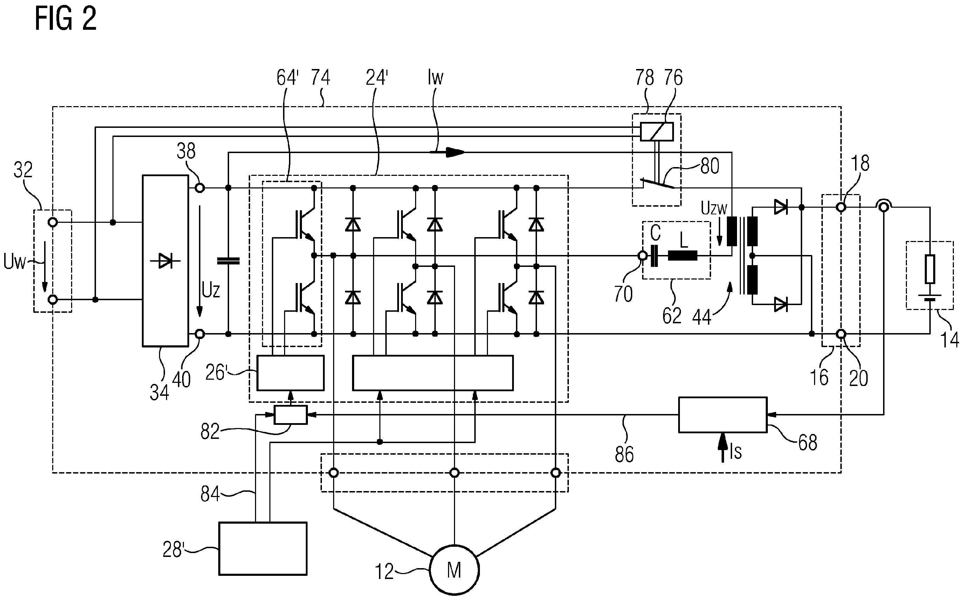

In FIG 2 ist ein weiterer Umrichter 74 gezeigt. Der Umrichter 74 weist einen ähnlichen Aufbau auf, wie der in FIG 1 gezeigte Umrichter 10. Aus diesem Grund sind im Folgenden nur diejenigen Merkmale des Umrichters 74 beschrieben, durch welche sich dieser von dem Umrichter 10 unterscheidet und die für das Verständnis der Erfindung wesentlich sind. In FIG 2 sind dabei Elemente, die in ihrer Funktionsweise Elementen entsprechen, die in FIG 1 dargestellt sind, mit denselben Bezugszeichen wie in FIG 1 versehen.

Über den Umrichter 74 ist eine Traktionsbatterie 14 mit einem Elektromotor 12 gekoppelt. Zum Aufladen der Traktionsbatterie 14 wird ein Wechselspannungseingang 32 mit einer Wechselspannungsquelle gekoppelt, welche an dem Wechselspannungseingang 32 eine Wechselspannung Uw erzeugt. Durch die Wechselspannung Uw wird ein unmittelbar mit dem Wechselspannungseingang 32 gekoppelter Elektromagnet 76 eines Relais 78 automatisch aktiviert. Hierdurch wird ein Schalter 80 des Relais 78 geöffnet und eine elektrische Verbindung zwischen einem Plus-Kontakt 18 eines Gleichspannungsanschlusses 16 des Umrichters 74 und einer Brückenschaltung 24' unterbrochen, die eine Wechselrichterschaltung des Umrichter 74 darstellt. Durch einen mit dem Wechselspannungseingang 32 gekoppelten Gleichrichter 34 wird eine Zwischen-Gleichspannung Uz erzeugt, die von einem Resonanzwandler in eine Zwischen-Wechselspannung Uzw umgewandelt wird, welche über einer Primärspule eines Transformators 44 abfällt.

Zu dem Resonanzwandler gehören ein LC-Glied 62 und eine Halbbrücke 64', die Bestandteil der Brückenschaltung 24' ist. Zum Aufladen der Traktionsbatterie 14 wird ein Anschluss 70 des LC-Glieds 62 abwechselnd mit einem Plus-Ausgang 38 und einem Minus-Ausgang 40 des Gleichrichters 34 durch die Halbbrücke 64' gekoppelt.

Der Umrichter 74 weist somit anders als der Umrichter 10 keine separate Halbbrücke zum Erzeugen der Zwischen-Wechselspannung Uzw auf, sondern es wird die Halbbrücke 64' der Brückenschaltung 24' doppelt genutzt. Die Brückenschaltung 24' ist dazu sowohl mit dem Plus-Ausgang 38 als auch mit dem Minus-Ausgang 40 der Gleichschaltung 34 elektrisch verbunden.

Zum Betreiben des Resonanzwandlers werden zwei IGBTs der Halbbrücke 64' von einer Gate-Treiberschaltung 26' entsprechend angesteuert. Während des Aufladens der Traktionsbatterie 14 empfängt die Gate-Treiberschaltung 26' ein entsprechendes Umschaltsignal von einer Regeleinheit 68. Während eines Fahrbetriebs eines Personenkraftwagens, in welchem der Umrichter 74 eingebaut ist, bildet die Brückenschaltung 24' den Wechselrichter zum Umwandeln der von der Traktionsbatterie 14 bereitgestellten Gleichspannung in Wechselspannungen für den Elektromotor 12. Dann empfängt die Gate-Treiberschaltung 26' das Umschaltsignal von einer Motor-Regeleinheit 28' .

Zu Beginn der Aufladephase der Traktionsbatterie 14 wurde von der Motor-Regeleinheit 28' ein Schaltsignal an eine Weiche 82 gesendet, die daraufhin eine elektrische Verbindung zwischen einer Signalleitung 84 der Motor-Regeleinheit 28' und dem Gerätetreiber 26' unterbrochen und eine elektrische Verbindung zwischen einer Signalleitung 86 zwischen der Regeleinheit 68 und dem Gerätetreiber 26' hergestellt hat. Die übrigen Halbbrücken der Brückenschaltung 26' sind durch ein entsprechendes Steuersignal der Motor-Regeleinheit 28' in einen sperrenden Zustand geschaltet worden. Bei der Weiche 82 kann es sich um einen einfachen steuerbaren Schalter handeln.

Die Halbbrücke 64' kann in derselben Weise geschaltet werden, wie die Brücke 64 des Umrichters 10. Die Schaltfrequenz, mit welcher der Resonanzwandler betrieben wird, liegt in einem Bereich, in dem es möglich ist, die eigentlich für den Antrieb des Elektromotors vorgesehenen Leistungs-Transistoren der Halbbrücke 64' auch zum Betreiben des Resonanzwandlers zu verwenden, da sich das Fahrzeug während des Ladevorgangs in Ruhe befindet und der Elektromotor abgeschaltet ist. Die Halbbrücke 64' ist zwar für eine kleinere Schaltfrequenz, wie sie zum Betreiben des Elektromotors 12 benötigt wird, konstruiert. Sie ist deshalb aber auch für eine wesentlich größere Leistung ausgelegt, als sie während des Ladevorgangs der Traktionsbatterie 14 durch die Halbbrücke 66' geführt wird. Mit anderen Worten kommt es zwar während des Ladevorgangs in der Halbbrücke 64' aufgrund der im Verhältnis zum Fahrbetrieb höheren Schaltfrequenz der Leistungs-Transistoren zu mehr Schaltvorgängen, durch welche Schaltverluste verursacht werden können. Da während des Ladevorgangs aber sehr viel kleinere Leistungen geschaltet werden als während des Fahrbetriebs, ergibt sich in der Summe nur eine verhältnismäßig kleine Verlustleistung. Dies gilt insbesondere dann, wenn die Leistungs-Transistoren bei Nulldurchgängen der Stromamplitude des Wechselstroms Iw geschaltet werden. Deshalb ist es unter dem Gesichtspunkt einer Minimierung der Schaltverluste beim Schalten der Halbbrücke 64' möglich, die Leistungs-Transistoren der Halbbrücke 64' auch für den Resonanzwandler einzusetzen, womit die Leistungselektronik minimiert wird.

Bei dem in FIG 2 gezeigten Umrichter 74 wird die Traktionsbatterie 14 vom Phasenmodul, das heißt von der Halbbrücke 64', galvanisch abgekoppelt. Dazu ist das Relais 78 vorgesehen. Anstelle des Relais 78 kann auch ein anderer steuerbarer Schalter verwendet werden. Für Service-Zwecke muss ein solcher Trenner ohnehin vorhanden sein, so dass zum Bereitstellen der Aufladeeinrichtung in dem Umrichter 74 durch das Relais 78 kein Mehraufwand bei der Herstellung des Umrichters 74 verursacht wird.

Insgesamt ist durch die Beispiele gezeigt, wie sich eine Batterieladeeinrichtung in einem Antriebsumrichter integrieren lässt und dabei gleichzeitig Störaussendung und Ströme im stets angeschlossen Motor vermindert werden können. An den Motor werden dabei keine zusätzlichen Anforderungen gestellt hinsichtlich der Art und der Bauweise seines Wicklungssystems.

## Patentansprüche

1. Elektrischer Umrichter (74) zum Betreiben eines elektrischen Antriebsmotors (12) eines Elektrofahrzeugs, umfassend
- einen Wechselspannungsausgang (22) zum Anschließen eines Antriebsmotors (12),
- einen Gleichspannungsanschluss (16) zum Anschließen einer Traktionsbatterie (14),
- einen Wechselspannungseingang (32), der vom Wechselspannungsausgang (22) verschieden ist,
- eine Wechselrichterschaltung (24'), über welche der Wechselspannungsausgang (22) mit dem Gleichspannungsanschluss (16) gekoppelt ist und welche eine Umrichter-Brückenschaltung (24') mit einer Halbbrücke (64') umfasst, und
- eine Gleichrichterschaltung (26',34, 44,58,60,62,64',66, 68,72), über welche der Wechselspannungseingang (32) mit dem Gleichspannungsanschluss (16) gekoppelt ist, umfassend:
- eine erste Gleichrichteinheit (58, 60), welche wenigstens ein induktives Schaltungselement (50,52) aufweist, welchem ein Gleichrichtelement (54,56) zum Gleichrichten einer über dem induktiven Schaltungselement (50, 52) abfallenden Wechselspannung (Uw1, Uw2) nachgeschaltet ist, wobei die gleichgerichtete Spannung (Ub) zwischen einem Plus-Kontakt (18) des Gleichspannungsanschlusses (16) und einem Minus-Kontakt (20) desselben als eine Auflade-Gleichspannung (Ub) abgreifbar ist,
- eine zweite Gleichrichteinheit (34) und
- einen Resonanzwandler (26',62,64',66,68),
wobei die erste Gleichrichteinheit (58,60) über die zweite Gleichrichteinheit (34) und den Resonanzwandler (26',62, 64', 66, 68) mit dem Wechselspannungseingang (32) gekoppelt ist, **dadurch gekennzeichnet, dass** bei dem Resonanzwandler (26', 62, 64',66, 68)eine Wechselschalteinrichtung (64') zum abwechselnden Koppeln eines Anschlusses (70) eines LC-Glieds (62) des Resonanzwandlers mit Kontakten (38,40) der ersten Gleichrichteinheit (34) durch die Halbbrücke (64') gebildet ist.

2. Umrichter (10,74) nach Anspruch 1, **dadurch gekennzeichnet, dass** das induktive Schaltungselement (50,52) durch eine Sekundärspule (46) eines Transformators (44) gebildet ist und dessen Primärspule (42) mit dem Wechselspannungseingang (32) gekoppelt ist.

3. Umrichter (74) nach einem der vorhergehenden Ansprüche, **gekennzeichnet durch** eine Trenneinrichtung (78) zum Unterbrechen einer elektrischen Verbindung zwischen dem Gleichspannungsanschluss (16) und wenigstens einem Bauelement (24') der Wechselrichterschaltung (24'), wobei die Trenneinrichtung bevorzugt ein Relais (78) umfasst, dessen Magnetspule (76) mit dem Wechselspannungseingang (32) gekoppelt ist.

4. Umrichter (10,74) nach einem der vorhergehenden Ansprüche, **dadurch gekennzeichnet, dass** der Wechselspannungseingang (32) einen Anschlussstecker zum Anschließen des Umrichters (10,74) an eine Steckdose eines elektrischen Versorgungsnetzes umfasst.

5. Kraftwagen mit einem Elektromotor (12) zum Antreiben des Kraftwagens, einer Traktionsbatterie (14) zum Bereitstellen einer elektrischen Gleichspannung zum Betreiben des Elektromotors und mit einem Umrichter (10,74) gemäß einem der vorhergehenden Ansprüche, wobei die Traktionsbatterie (14) über den Umrichter (10,74) mit dem Elektromotor (12) gekoppelt ist.

6. Verfahren zum Betreiben eines Umrichters (10,74) nach einem der Ansprüche 1 bis 4 für einen elektrischen Antriebsmotor (12) eines Elektrofahrzeugs, mit den Schritten:
- Empfangen einer Eingangs-Wechselspannung (Uw) eines elektrischen Versorgungsnetzes über einen Wechselspannungseingang (32), welcher von einem Anschluss (22) für den Antriebsmotor (12) verschieden ist,
- Gleichrichten der Wechselspannung (Uw) und hierdurch Erzeugen einer Auflade-Gleichspannung (Ub) an einem Gleichspannungsanschluss (16) für eine Traktionsbatterie (14),
- Aufladen einer an dem Gleichspannungsanschluss (16) angeschlossenen Traktionsbatterie (14) mittels der Auflade-Gleichspannung (Ub),
**dadurch gekennzeichnet, dass** ein Schaltzustand einer als Wechselschalteinrichtung (64,64') betriebenen Halbbrücke (64,64'), die zwei Insulated-Gate-Bipolar-Transistoren, IGBTs, sowie eine Gate-Treiberschaltung (66) für die beiden IGBTs aufweist, zum abwechselnden Koppeln eines Anschlusses (70) eines LC-Glieds (62) eines Resonanzwandlers mit unterschiedlichen Kontakten (38,40) einer Gleichspannungsquelle (34) während eines Betriebs des Resonanzwandlers nur in einem Nulldurchgang eines Verlaufs einer Stromstärke eines durch das LC-Glied (62) fließenden Wechselstroms (Iw) verändert wird.

7. Verfahren nach Anspruch 6, bei welchem eine Stromstärke eines über den Gleichspannungsanschluss (16) in die Traktionsbatterie (14) fließenden Aufladestroms (Il) mittels eines Resonanzwandlers (26',62,64,64',66,68) gesteuert wird.

8. Verfahren nach Anspruch 6 oder 7, bei welchem bei dem Schritt des Gleichrichtens ein Effektivwert einer Amplitude der Auflade-Gleichspannung (Ub) mittels eines induktiven Schaltungselements (50,52), insbesondere mittels eines Resonanzwandlers und/oder mittels eines Transformators (44), auf einen Wert eingestellt wird, der von einem Effektivwert der Eingangs-Wechselspannung (Uw) verschieden ist.

## Claims

1. Electrical converter (74) for operating an electric drive motor (12) of an electric vehicle, comprising:
- an alternating voltage output (22) for connecting a drive motor (12),
- a direct voltage connector (16) for connecting a traction battery (14),
- an alternating voltage input (32) that is different from the alternating voltage output (22),
- an inverter circuit (24') via which the alternating voltage output (22) is coupled to the direct voltage connector (16) and which comprises a converter bridge circuit (24') having a half bridge (64'), and,
- a rectifier circuit (26', 34, 44, 58, 60, 62, 64', 66, 68, 72) via which the alternating voltage input (32) is coupled to the direct voltage connector (16), comprising:
- a first rectifier unit (58, 60) that has at least one inductive circuit element (50, 52), downstream of which is a rectifier element (54, 56) for rectifying an alternating voltage (Uw1, Uw2) declining via the inductive circuit element (50, 52), wherein the rectified voltage (Ub) may be tapped between a positive contact (18) of the direct voltage connector (16) and a negative contact (20) of same as a charging direct voltage (Ub),
- a second rectifier unit (34), and,
- a resonance converter (26' 62, 64', 66, 68), wherein the first rectifier unit (58, 60) is coupled via the second rectifier unit (34) and the resonance converter (26', 62, 64', 66, 68) is coupled to the alternating voltage input (32), **characterized in that**
in the resonance converter (26', 62, 64', 66, 68) a switching device (64') for alternating coupling of a connector (70) of an LC member (62) of the resonance converter with contacts (38, 40) of the first rectifier unit (34) is formed by the half bridge (64').

2. The converter (10, 74) according to claim 1, **characterized in that** the inductive circuit element (50, 52) is formed by a secondary coil (46) of a transformer (44) and its primary coil (42) is coupled to the alternating voltage input (32).

3. The converter (74) according to any of the preceding claims, **characterized by** a separating device (78) for interrupting an electrical connection between the direct voltage connector (16) and at least one component (24') of the inverter circuit (24'), wherein the separating device preferably comprises a relay (78), the magnetic coil (76) of which is coupled to the alternating voltage input (32).

4. The converter (10, 74) according to any of the preceding claims, **characterized in that** the alternating voltage input (32) comprises a connecting plug for connecting the converter (10, 74) to a socket of an electrical power supply network.

5. A motor vehicle having an electric motor (12) for driving the motor vehicle, a traction battery (14) for providing an electrical direct voltage for operating the electric motor and having a converter (10, 74) according to any of the preceding claims, wherein the traction battery (14) is coupled to the electric motor (12) via the converter (10, 74).

6. A method for operating a converter (10, 74) according to any of claims 1 through 4 for an electric drive motor (12) of an electric vehicle, having the steps:
- Receiving an input alternating voltage (Uw) of an electrical power supply network via an alternating voltage input (32) that is different from a connector (22) for the drive motor (12),
- Rectifying the alternating voltage (Uw) and hereby producing a charging direct voltage (Ub) on a direct voltage connector (16) for a traction battery (14),
- Charging a traction battery (14) connected to the direct voltage connector (16) by means of the charging direct voltage (Ub),
**characterized in that** a switching state of a half bridge (64, 64'), operated as a switching device (64, 64'), that has two insulated gate bipolar transistors, IGBTs, and one gate driver circuit (66) for the two IGBTs, for alternating coupling of a connector (70) of an LC member (62) of a resonance converter having different contacts (38, 40) of a direct voltage source (34) during operation of the resonance converter is only changed at a zero point of a course of a current of an alternating current (I_{w}) flowing through the LC member.

7. The method according to claim 6, in which a current strength of a charging current (11) flowing via the direct voltage connector (16) into the traction battery (14) is controlled by means of a resonance converter (26', 62, 64, 64', 66, 68).

8. The method according to claim 6 or 7, in which, in the rectifying step, an effective value of an amplitude of the charging direct voltage (Ub) is set, by means of an inductive circuit element (50, 52), in particular by means of a resonance converter and/or by means of a transformer (44), to a value that is different from an effective value of the input alternating voltage (Uw).

## Revendications

1. Convertisseur électrique (74) destiné au fonctionnement d'un moteur d'entraînement électrique (12) d'un véhicule électrique, comprenant
- une sortie de tension alternative (22) pour le raccordement d'un moteur d'entraînement (12),
- un raccordement de tension continue (16) pour le raccordement d'une batterie de propulsion (14),
- une entrée de tension alternative (32) qui est différente de la sortie de tension alternative (22),
- un montage onduleur (24') par le biais duquel la sortie de tension alternative (22) est couplée au raccordement de tension continue (16) et lequel comporte un montage en pont de convertisseur (24') avec un demi-pont (64'), et
- un montage redresseur (26', 34, 44, 58, 60, 62, 64', 66, 68, 72) par le biais duquel l'entrée de tension alternative (32) est couplée au raccordement de tension continue (16), comprenant :
- une première unité de redressement (58, 60) qui comporte au moins un élément de circuit inductif (50, 52) en aval duquel est monté un élément de redressement (54, 56) pour le redressement d'une tension alternative (Uw1, Uw2) chutant sur l'élément de circuit inductif (50, 52), en ce que la tension redressée (Ub) entre un contact positif (18) du raccordement de tension continue (16) et un contact négatif (20) de celui-ci peut être soutirée comme tension continue de charge (Ub),
- une seconde unité de redressement (34) et
- un convertisseur de résonance (26', 62, 64', 66, 68),
en ce que la première unité de redressement (58, 60) est couplée à l'entrée de tension alternative (32) par le biais de la seconde unité de redressement (34) et du convertisseur de résonance (26', 62, 64', 66, 68), **caractérisé en ce que** le convertisseur de résonance (26', 62, 64', 66, 68) comporte un dispositif inverseur (64') qui est formé pour le couplage alternatif d'un raccordement (70) d'un composant LC (62) du convertisseur de résonance avec des contacts (38, 40) de la première unité de redressement (34) par le demi-pont (64').

2. Convertisseur (10, 74) selon la revendication 1, **caractérisé en ce que** l'élément de circuit inductif (50, 52) est formé par une bobine secondaire (46) d'un transformateur (44) et dont la bobine primaire (42) est couplée à l'entrée de tension alternative (32).

3. Convertisseur (74) selon l'une des revendications précédentes, **caractérisé par** un dispositif de sectionnement (78) pour interrompre une connexion électrique entre le raccordement de tension continue (16) et au moins un composant (24') du montage onduleur (24'), en ce que le dispositif de sectionnement comporte de préférence un relais (78) dont la bobine magnétique (76) est couplée à l'entrée de tension alternative (32).

4. Convertisseur (10, 74) selon l'une des revendications précédentes, **caractérisé en ce que** l'entrée de tension alternative (32) comporte une fiche de raccordement pour raccorder le convertisseur (10 ,74) à une prise de courant d'un réseau d'alimentation électrique (1).

5. Véhicule automobile comportant un moteur électrique (12) pour entraîner le véhicule automobile, une batterie de propulsion (14) pour fournir une tension continue électrique destinée au fonctionnement du moteur électrique et un convertisseur (10, 74) selon l'une des revendications précédentes, en ce que la batterie de propulsion (14) est couplée au moteur électrique (12) par le biais du convertisseur (10, 74).

6. Procédé de fonctionnement d'un convertisseur (10 ,74) selon l'une des revendications 1 à 4 pour un moteur d'entraînement électrique (12) d'un véhicule électrique, comprenant les étapes consistant à :
- recevoir une tension alternative d'entrée (Uw) d'un réseau d'alimentation électrique par le biais d'une entrée de tension alternative (32), laquelle est différente d'un raccordement (22) pour le moteur d'entraînement (12),
- redresser la tension alternative (Uw) et générer ainsi une tension continue de charge (Ub) sur un raccordement de tension continue (16) pour une batterie de propulsion (14),
- charger une batterie de propulsion (14) raccordée au raccordement de tension continue (16) au moyen de la tension continue de charge (Ub),
**caractérisé en ce qu'**un état de commutation d'un demi-pont (64, 64') fonctionnant comme dispositif inverseur (64, 64') qui comporte deux transistors bipolaires à grille isolée, ou IGBT, ainsi qu'un circuit d'excitation de grille (66) pour les deux IGBT, est modifié pour le couplage alternatif d'un raccordement (70) d'un composant LC (62) d'un convertisseur de résonance avec différents contacts (38, 40) d'une source de tension continue (34) pendant un fonctionnement du convertisseur de résonance uniquement dans un passage par zéro d'une courbe d'une intensité de courant d'un courant alternatif (Iw) passant par le composant LC (62).

7. Procédé selon la revendication 6, selon lequel une intensité de courant d'un courant de charge (I1) passant par le biais du raccordement de tension continue (16) dans la batterie de propulsion (14) est régulée au moyen d'un convertisseur de résonance (26', 62, 64, 64', 66, 68).

8. Procédé selon la revendication 6 ou 7, selon lequel à l'étape du redressement une valeur efficace d'une amplitude de la tension continue de charge (Ub) au moyen d'un élément de circuit inductif (50, 52), en particulier au moyen d'un convertisseur de résonance et/ou au moyen d'un transformateur (44) est réglée sur une valeur qui est différente d'une valeur efficace de la tension alternative d'entrée (Uw).
